# EUROPEAN PATENT SPECIFICATION

(11) **EP 2 680 472 B1**
(45) Date of publication and mention of the grant of the patent: **08.08.2018**
(21) Application number: 12174482.5
(22) Date of filing: 29.06.2012
(51) Int. Cl.: H04J 14/02, H04B 10/67

(54) **Optical network unit for an optical access network**
Optische Netzwerkeinheit für ein optisches Zugangsnetzwerk
Unité de réseau optique pour réseau d'accès optique

(43) Date of publication of application: 01.01.2014
(73) Proprietor: Alcatel Lucent, 91620 Nozay (FR)
(72) Inventor: Pöhlmann, Wolfgang, 71282 Hemmingen (DE)
(74) Representative: Wetzel, Emmanuelle

(56) References cited:
- EP-A1- 0 577 036
- EP-A2- 1 041 761
- WO-A1-2010/064981
- US-A1- 2007 154 216
- KAMAU PRINCE ET AL: "GigaWaM Next-Generation WDM-PON Enabling Gigabit Per-User Data Bandwidth", JOURNAL OF LIGHTWAVE TECHNOLOGY, IEEE SERVICE CENTER, NEW YORK, NY, US, vol. 30, no. 10, 1 May 2012 (2012-05-01), pages 1444-1454, XP011440079, ISSN: 0733-8724, DOI: 10.1109/JLT.2012.2185039

## Description

### Field of the invention

The invention relates to an optical network unit for an optical access network.

### Background

These days, access networks are used to connect multiple users or customers via an optical line terminal of the access network to a core network for the purpose of data transmission. Such an access network is also preferably called a passive optical network (PON).

The optical line terminal (OLT) is located in a so-called central office, at which the interconnection between the access network and the core network is given.

In a classical access network, the optical line terminal transmits a downstream signal at a downstream wavelength into an optical fiber, preferably called optical feeder fiber. This optical feeder fiber is connected to a remote node, which splits the downstream signal onto different optical branches, wherein one or more optical network units are connected to an optical branch. A customer may connect one or more devices to an optical network unit (ONU) for the purpose of data transmission. An optical network unit is also preferably called an optical network terminal, in the case that only one customer device is connected to the optical network unit.

In the mentioned classical access network, data transmission in the upstream direction is performed from the customer towards the core network, in that the optical network unit transmits data at an upstream wavelength into one of the optical branches. The remote node then combines all the different upstream signals of the different optical branches and provides the combined upstream signal via the optical feeder fiber to the optical line terminal. Data transmission of the different optical network units is coordinated, in that the transmission technique of time division multiplexing (TDM) is employed. Therefore, each optical network unit is assigned one or more time slots for transmitting data in the upstream direction. Furthermore, each optical network unit is assigned a unique identifier by the optical line terminal in a so-called ranging process.

An example of a classical access network is a so-called XG-PON1 network, in which the optical line terminal transmits its downstream signal with a downstream wavelength that can vary within a pre-defined wavelength bandwidth. This ensured, by selecting the transmitter of the optical line terminal after manufacturing according to a give manufacturing tolerance and also by a temperature tuning of this transmitter within the optical line terminal. This temperature tuning is not aimed at tuning the transmission wavelength over the full transmission bandwidth. The temperature tuning may be achieved by a thermoelectric element relying on the Peltier effect. The pre-defined wavelength bandwidth is preferably of 5nm bandwidth.

In other words, the pre-defined bandwidth is broad enough, such that the downstream signal falls within the pre-defined bandwidth without having to fully stabilize the laser transmission unit of the optical line terminal. The optical network units of the network are then able to receive the downstream signal within the pre-defined downstream wavelength bandwidth. Furthermore, in an XG-PON1 network, an optical network unit transmits its upstream signal with an upstream wavelength that falls within a pre-defined upstream wavelength bandwidth, preferably 20 nm. For the optical network units, the laser transmission units are unstabilized in temperature , such that the upstream wavelength may vary, while it is taken care, that the upstream wavelength falls within the pre-defined upstream wavelength bandwidth. This is taken care of, by choosing the transmission units of the optical line terminal and the optical network units after manufacturing, such that the respective wavelengths fall within the pre-defined respective wavelength bandwidth for transmission for a pre-defined temperature range without any tuning.

Thus, there is no need for filtering out a downstream signal at an optical network unit and also no need for tuning an upstream laser transmission unit of an optical network unit to a specific upstream wavelength.

In a PON network using not only TDM, but also wavelength division multiplexing (WDM), preferably called TWDM PON, multiple downstream signals are generated by an optical line terminal at respective downstream wavelengths, while the laser transmission units for generating these multiple downstream signals are stabilized, preferably via temperature stabilization, such that the downstream wavelengths do not show a significant variation. The downstream signals are spaced by a pre-defined wavelength difference, wherein this wavelength difference is preferably a grid of 100GHz separating the different downstream wavelengths. Preferably, four downstream wavelength signals with such a spacing fall within a downstream wavelength bandwidth window of 400GHz.

In a TWDM PON, an optical network unit shall receive data via one specific downstream signal with one specific downstream wavelength. Thus, in an optical network unit of a TWDM PON, there is a need to filter out a specific downstream wavelength at the optical network unit, before processing the received optical signal for the purpose of data reception. Documents EP0577036 A1, US 2007/154216 A1, EP1041761 A2 and WO 2010/064981 A1 disclose methods and devices for wavelength alignment and wavelength tracking in passive optical networks.

### Summary

Proposed is an optical network unit for an optical access network according to claim 1, and a corresponding method of data transmission at such optical network unit according to claim 9.

The invention is solely defined by the appended claims. Embodiments that do not fully fall within the scope of the appended claims are to be understood as examples useful for understanding the invention. The optical network unit contains different sub-devices.

The unit contains an optical interface, which is operable to receive an optical downstream signal from an optical fiber.

Furthermore, the unit contains a tunable optical filter, which is operable to filter out a respective tunable wavelength bandwidth from the received optical downstream signal.

Even furthermore, the unit contains an optical reception unit, which is operable to convert the filtered optical downstream signal to an electrical signal.

Finally, the optical network unit contains at least one control unit, which is operable to observe a signal power of the filtered optical downstream signal, using the electrical signal. The control unit tunes the wavelength bandwidth of the optical filter, such that the signal power of the filtered optical downstream signal is maximized, using the electrical signal.

The optical network unit comprises furthermore an optical transmission unit that is operable to generate an optical upstream signal at an initial upstream wavelength. The optical interface is furthermore operable to provide the optical upstream signal to the optical fiber.

The control unit is furthermore operable to
- detect an indication of a time window indicated by the optical downstream signal, by analyzing the filtered optical downstream signal, using the electrical signal, and
- to control the optical transmission unit, such the optical upstream signal carries at least within the detected time window indication data indicating a presence of the optical network unit within the optical access network.

In order to grasp the advantages of the proposed optical network unit, the following aspects have to be taken into consideration.

The proposed optical network unit contains a tunable optical filter, which filters out a respective tunable wavelength bandwidth from the received optical downstream signal. This filtered out wavelength bandwidth is preferably smaller than a bandwidth, within which a downstream signal may be transmitted, such as in an access network not employing the technique of WDM. Such filtering is not foreseen for an optical network unit of an optical access network, in which no WDM technique is employed. Thus, the optical filter may suppress the downstream wavelength of the one single downstream signal in an optical access network not employing the technique of WDM. Therefore, it is foreseen, that the control unit of the proposed optical network unit observes the signal power of the filtered downstream signal and tunes the optical filter, such that the signal power of the received and filtered optical downstream signal is maximized. Thus, it is ensured, that the optical network unit proposed herein properly receives a downstream signal of an unstabilized downstream wavelength, when being used in an access network not employing the technique of WDM.

Furthermore, by observing the signal power of the filtered downstream signal and tuning the optical filter in the proposed manner, there is no need to foresee an optical by-pass for the received optical downstream signal from the optical interface towards the optical reception unit. Although it would be a possible solution to use such an optical by-pass, which by-passes the received optical downstream signal from the optical interface around the tunable optical filter directly to the optical reception unit, the optical by-pass would cause a need for additional sub-devices in the optical network unit, which in turn would require more space within the optical network unit and thus might interfere with space restrictions.

To summarize the above, the proposed optical network unit works properly, when being used in an optical access network without employing the technique of WDM, while downstream signals may be generated by an optical line terminal with an unstabilized laser transmission unit causing a variation of the optical downstream signal. This is ensured, in that the control unit tunes the wavelength bandwidth of the filter in the proposed manner.

Furthermore, the optical network unit proposed herein may also be used in a TWDM PON, in which an optical line terminal generates multiple downstream signals with respective different downstream wavelengths, generated using stabilized laser transmission units, such that the different downstream wavelengths do not significantly vary. The bandwidth of the tunable filter is preferably smaller than a bandwidth used for downstream transmission, and furthermore, the bandwidth of the tunable filter has a passband bandwidth, which corresponds to a channel spacing used for downstream transmission. Since the control unit of the proposed optical network unit tunes the wavelength bandwidth of the optical filter, such that the signal power of the filtered optical downstream signal is maximized, it is insured, that the wavelength bandwidth of the optical filter is tuned to one of the multiple downstream wavelengths at which the optical line terminal transmits signals towards the optical network unit.

Since furthermore, in an optical access network there is usually foreseen a time window, during which an optical network unit may receive configuration data from the optical line terminal via each of the downstream wavelengths, and then choose one of the specific different downstream wavelengths indicated by the configuration data, the optical network unit is able to tune the optical filter at a later point of time to another of the downstream wavelengths, in the case that that downstream wavelength, to which the filter was initially tuned, was not the one, to which the optical line terminal assigns the optical network unit via the configuration data.

### Brief description of the Figures

Figure 1 shows an optical access network.
Figures 2a, b, c, d and e show different downstream and upstream wavelengths.
Figure 3 shows an optical access network employing the technique of TDM and WDM at the same time.
Figure 4a shows a proposed optical network unit.
Figure 4b shows sub-devices of the proposed optical network unit according to a preferred embodiment.

### Description of embodiments

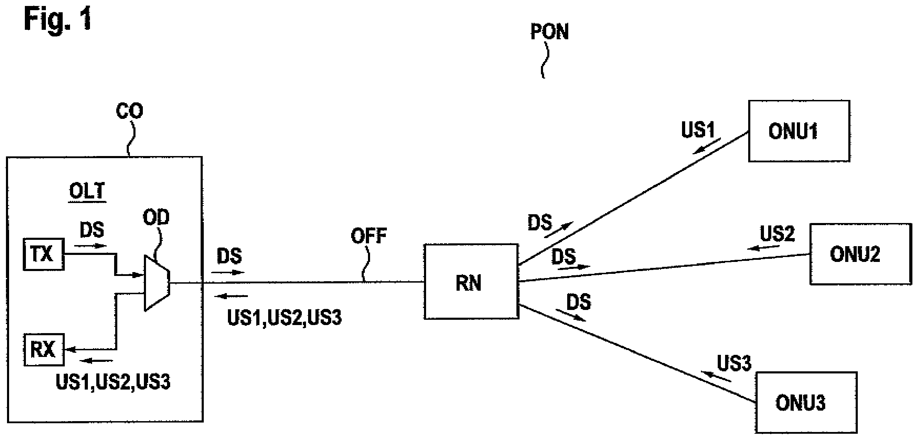

Figure 1 shows an optical access network PON, in which only one wavelength is used for downstream transmission and one other wavelength is used for upstream transmission.

At the central office CO, an optical line terminal OLT is located. The optical line terminal contains a transmitter TX, which generates the downstream signal DS. The downstream signal is provided by the optical line terminal to an optical feeder fiber OFF, to which a remote node RN is connected. The remote node RN splits the downstream signal DS onto the different branches of the optical access network PON, to which different optical network units ONU1, ... , ONU3 are connected.

The optical network units ONU1, ... , ONU3 transmit their respective upstream signals US1, ... , US3 via the optical branches to the remote node RN, which combines these upstream signals US1, ... , US3 to a combined upstream signal. This combined upstream signal is then provided by the remote node RN via the optical feeder fiber to the optical line terminal.

At the optical line terminal, an optical device OD may be employed, for separating the upstream signals US1, ... , US3 of the upstream wavelength from the downstream signal DS of the downstream wavelength. The device OD is preferably a WDM filter. The optical device OD then provides the upstream signals US1, ... , US3 to a receiving unit RX.

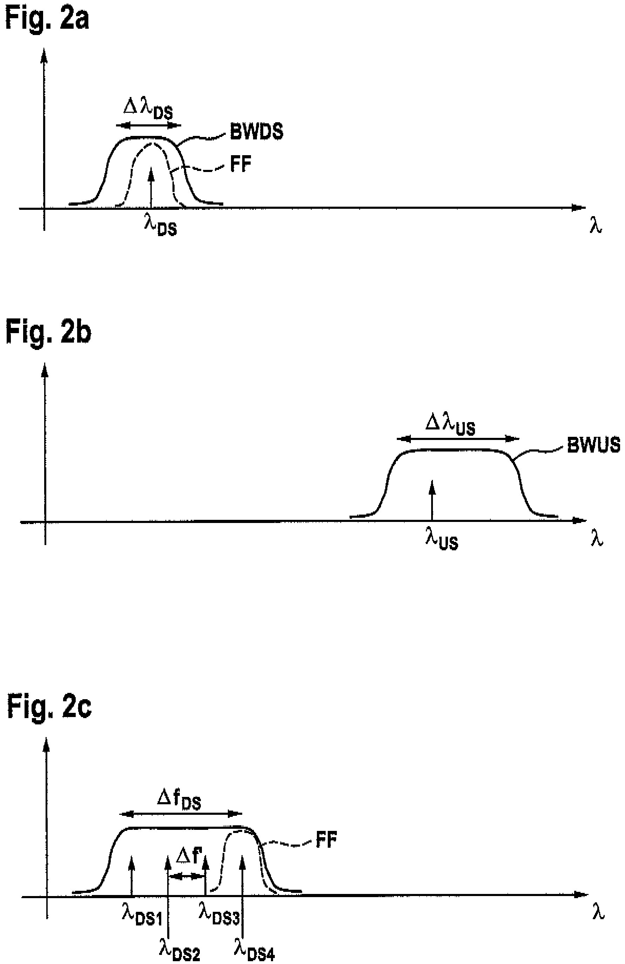

Figure 2a shows a downstream bandwidth BWDS which is defined by an allowed downstream wavelength bandwidth Aλ_{DS}, which is preferably 5nm. Within such a downstream bandwidth BWDS, the optical line terminal shown in Figure 1 transmits the downstream signal at a downstream wavelength λ_{DS}.

Figure 2b shows an upstream bandwidth BWUS, which is defined by a wavelength bandwidth Δλ_{US}, which is preferably 20nm. An optical network unit of the access network shown in Figure 1 transmits its upstream signal at an upstream wavelength λ_{US}, that falls within the upstream bandwidth BWUS.

As previously described above, the transmitters of the optical line terminal and the optical network units of the access network shown in Figure 1 are usually selected after manufacturing, such that it is ensured, that the downstream signals and the upstream signals generated by the transmitters fall within the respective bandwidths defined for the access network even if being affected by temperature changes within a predefined range. As it has also been mentioned previously, the transmitter of the optical line terminal may be partially stabilized in temperature.

Coming back to Figure 2a, it is also shown a filter function FF, which represents the wavelength bandwidth of the optical filter used for filtering a received downstream signal. As previously described, the control unit of the proposed optical network unit observes the signal power of the filtered optical downstream signal and tunes the wavelength bandwidth, shown as the filter function FF, such that signal power of the filtered downstream signal is maximized. Thus, the proposed optical network unit is able to receive the downstream signal properly in an access network shown in Figure 1, which is preferably an XG-PON1 network.

The tuning of the wavelength bandwidth may be carried out, by tuning the wavelength bandwidth of the filter over the full range of the downstream bandwidth BWDS, shown in Figure 2a, and observing during this tuning process the signal power of the received optical signal. This tuning may start at the lowest wavelength of the downstream bandwidth BWDS. In the case, that the signal power increases, the wavelength bandwidth is tuned towards a higher wavelength, while in the case, that the signal power decreases, the wavelength bandwidth is tuned to a lower wavelength.

The tuning may also start at the highest wavelength of the downstream bandwidth BWDS. In the case, that the signal power increases, the wavelength bandwidth is tuned towards a lower wavelength, while in the case, that the signal power decreases, the wavelength bandwidth is tuned to a higher wavelength.

By such a gradient tuning process, the wavelength bandwidth of the optical filter may be tuned, such that the resulting filter function FF shown in Figure 2a ensures a proper filtering and reception of the downstream signal by the optical filter.

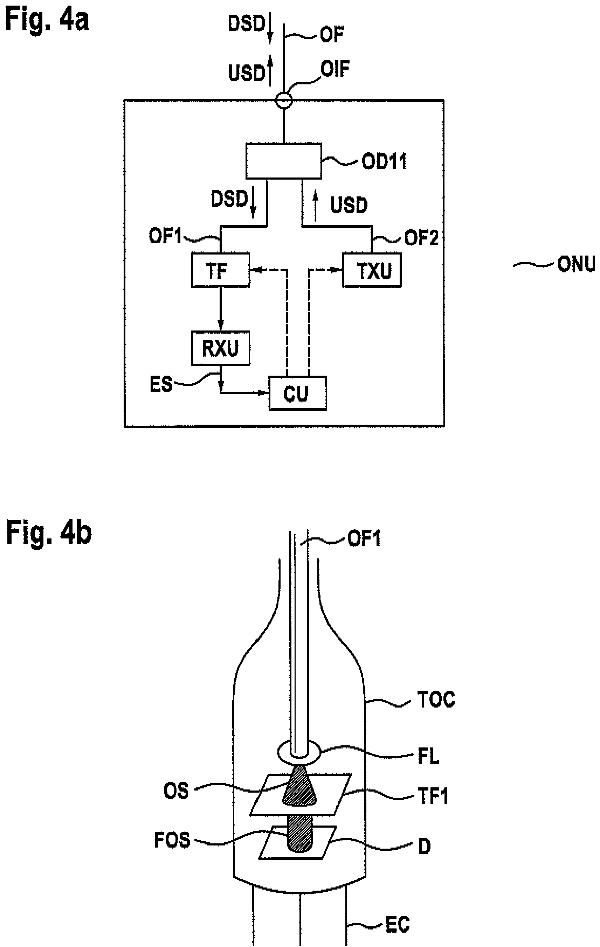

Figure 4a shows the proposed optical network unit ONU according to an embodiment of the invention. The optical network unit ONU contains an optical interface OIF, which may be a plug for connecting an optical fiber OF. Such an optical interface is preferably a fiber pigtail. An optical downstream signal received in downstream direction DSD is then provided to a tunable optic filter TF. This filter then provides the filtered signal to a receiving unit RXU, which converts the filtered downstream signal to an electrical signal ES. The electrical signal ES is then provided to a control unit CU.

The optical network unit ONU furthermore contains a transmission unit TXU, which is controlled by the control unit CU. The transmission unit TXU generates an upstream signal in the upstream direction USD.

The tunable filter TF and the transmission unit TXU are preferably connected via respective optical fibers OF1, OF2 to an optical device OD11, which itself is connected to the optical interface OIF. The optical device OD11 performs a splitting of the signals in downstream direction DSD and upstream direction USD at wavelength level.

The control unit CU preferably controls the wavelength bandwidth of the tunable filter TF via a heater circuit, which is preferably an integral part of the tunable filter TF. Alternatively, the tunable filter is controlled via a cooling circuit. As an even further alternative, the tunable filter is a mechanically controlled tunable filter.

For determining the signal power of the filtered optical downstream signal, the control unit CU preferably employs the so-called RSSI-function, which is a received signal strength indicator (RSSI).

Furthermore, the control unit CU preferably controls an upstream wavelength, at which the transmission unit TXU generates an upstream signal, by controlling a heating circuit, which is preferably an integral part of the transmission unit TXU. The transmission unit TXU preferably contains a Distributed Feedback (DFB) laser, which is controlled in temperature and thus also in its wavelength. Such temperature control may be achieved by heating and/or cooling circuits. Alternatively, the transmission unit TXU contains a signal generator, whose generated wavelength is furthermore filtered by complex tunable filter structures, that select the transmitted wavelength.

Figure 4b shows sub-devices of the proposed optical network unit according to a preferred embodiment.

The optical fiber OF1 is connected to a housing, which is preferably a TO can TOC. The optical fiber OF1 may be connected to the device shown in Figure 4b via a fiber pigtail.

The downstream signal received from the optical fiber OF1 is provided preferably to a focusing lens FL, which then provides the optical downstream signal OS to the tunable filter TF1. The tunable filter is preferably one, that is manufactured from a fused silicia waiver, and which already contains the previously mentioned heating circuit.

The filtered optical signal FOS is then provided to a detector D, which is preferably a photo diode.

This detector D then converts the filtered optical signal FOS to an electrical signal.

An exchange of electrical signals from the control unit to the different sub-devices shown in Figure 4b may be carried out via one or more electrical connectors EC.

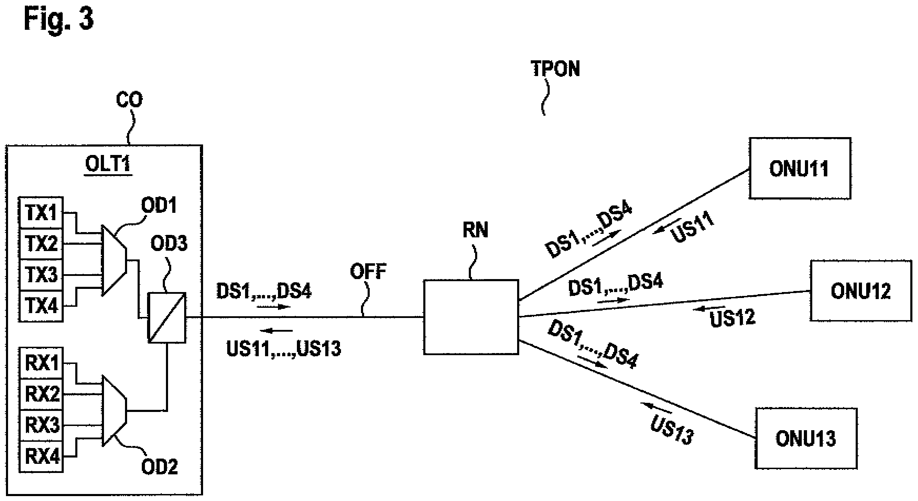

Figure 3 shows an optical access network TPON, which employs the technique of TWDM. This network is preferably called a TWDM PON.

At the central office CO, an optical line terminal OLT1 contains multiple transmission units TX1, ... , TX4. These transmission units generate respective downstream signals at respective downstream wavelengths. Such downstream wavelengths λ_{DS1}, ... , λ_{DS4} are shown in Figure 2c. These downstream wavelengths fall within a downstream bandwidth that has the bandwidth described by a frequency bandwidth Δf_{DS}.

Coming back to Figure 3, the different downstream signals are then provided via one or more optical devices OD1, OD3 to the optical feeder fiber OFF. Preferably, the optical device OD1 is a WDM multiplexing device combining the upstream signals of different upstream wavelengths, while the optical device OD3 is an optical WDM multiplexing device separating downstream signals of downstream wavelengths from upstream signals with upstream wavelengths.

The different downstream signals DS1, ... DS4 are then split by the remote node RN onto the different optical branches, from which they reach the different optical network units ONU11, ... , ONU13.

In such a TWDM network, an optical network unit ONU11, ... , ONU13 is supposed to filter out one of the downstream signals DS1, ... , DS4 for receiving data from the optical line terminal OLT1.

Furthermore, each optical network unit ONU11, ... , ONU13 generates a respective upstream signal US11, ... , US13 at a respective upstream wavelength. These upstream signals are then combined by the remote node RN and provided as a combined upstream signal via the optical feeder fiber to the optical line terminal OLT1.

At the optical line terminal OLT1, the optical device OD3 provides the upstream signals with their respective upstream wavelength to a further optical device OD2, which is preferably a WDM de-multiplexer. Finally, the upstream signals are provided to respective receivers RX1, ... , RX4 of the optical line terminal OLT1.

Figure 2c shows the filter function FF of a tunable optical filter present within an optical network unit. The proposed optical network unit tunes the filter function FF of its optical filter to one of the downstream wavelengths, in this example the wavelength λ_{DS4}, using a tuning process a previously described above.

Therefore, the optical network unit receives one of the downstream signals from the optical line terminal, while it is not yet guaranteed that this is the correct wavelength of a downstream signal, via which data transmission shall occur from the optical line terminal towards the optical network unit.

The control unit of the optical network unit observes the received downstream signal, using the electrical signal, which is provided to the control unit.

By analyzing the filtered optical downstream signal, the control unit is able to detect a time window, within which the optical line terminal is trying to detect upstream signals sent by optical network units. The control unit controls the optical transmission unit, such that it generates the optical upstream signal at least within the detected time window. The optical upstream signal is generated such that it carries indication data that indicates the presence of the optical network unit towards the optical line terminal.

In the case, that the optical line terminal properly receives the optical upstream signal generated by the optical network unit, the optical line terminal will answer this, by sending via each of the downstream signals with their respective downstream wavelength configuration data towards the optical network unit. The optical network unit needs to receive only one of the downstream signals properly, since the optical line terminal transmits within a time window configuration data via each of the different downstream signals.

The question of course is, whether the optical transmission unit generates the optical upstream signal at an initial upstream wavelength that fits a wavelength grid of the optical device OD2 of the line terminal OLT1 shown in Figure 3.

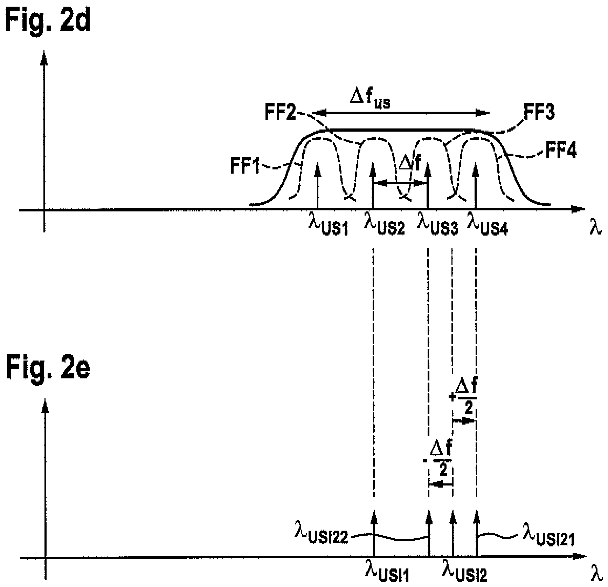

Figure 2d shows a bandwidth spacing for upstream signals in a TWDM PON. This bandwidth is defined by a frequency bandwidth Δf_{US}.

The different upstream signals shall be transmitted at respective upstream wavelengths λ_{US1}, ... , λ_{US4}, matching respective filter functions FF1, ... , FF4 of the optical device OD2 shown in Figure 3.

The different upstream wavelengths λ_{US1}, ... , λ_{US4} are separated by a spacing in frequency of Δf. Preferably Δf equals to 100Ghz, while, when using four different upstream wavelengths, the total bandwidth equals 2Δf_{US} = 400Ghz.

Figure 2e shows a first initial wavelength for upstream transmission λ_{USl1}. In the case, that the optical network unit transmits its optical upstream signal of this initial upstream wavelength λ_{USl1}, there is a sufficient chance, that this initial upstream wavelength λ_{USl1} fits into the filter function FF2, such that the optical line terminal detects this upstream signal of the initial upstream wavelength λ_{USl1}, although this initial upstream wavelength λ_{USl1} does not exactly match the preferred upstream wavelength λ_{US2} of the filter function FF2 at the optical line terminal. It shall be assumed, that the tuning of the upstream wavelength λ_{USl1} to the preferred upstream wavelength λ_{US2} is sufficient, such that the optical line terminal properly detects the transmitted upstream signal from the optical network unit.

Thus, the optical line terminal answers, by sending the previously mentioned configuration data each of the downstream signals, which then can be detected by the optical network unit.

This configuration data may then be used by the control unit to configure an identifier of the optical network unit to an identifier indicated in the configuration data.

Furthermore, the control unit may derive from the configuration data, at which upstream wavelength it shall control the transmission unit to generate the upstream signal. Therefore, the control unit controls the optical transmitter accordingly, for tuning the upstream wavelength.

Even furthermore, the control unit may derive from the configuration data, at which downstream wavelength the optical network unit shall receive an optical downstream signal for the purpose of data transmission from the optical line terminal to the optical network unit. Therefore, the control unit controls the tunable filter, such that it filters out the downstream wavelength indicated by the configuration data.

It was previously assumed, that the initially used upstream wavelength λ_{USl1} shown in Figure 2e sufficiently matches a filter function FF2', shown in Figure 2d, such that the optical line terminal is able to detect the upstream signal transmitted by the optical network unit.

In contrast to this, it may be the case, that the upstream signal is generated at a different initial upstream wavelength λ_{USl2}, which does not sufficiently match any of the filter functions FF1, ... , FF4 used for filtering upstream signals at the optical line terminal.

Therefore, in the case that the control unit of the optical network unit does not detect a reception of configuration data via the optical downstream signal within the previously mentioned time window, the control unit derives from this, that the optical line terminal was not able to detect the initially sent upstream signal with the upstream wavelength X_{USl2} properly. Therefore, the control unit controls the optical transmitter, such that it generates the optical upstream signal at a modified upstream wavelength. This modified upstream wavelength is then chosen to the initial upstream wavelength X_{USl2} plus or minus a pre-defined wavelength shift. Preferably, the pre-defined wavelength shift is equal to half of the channel spacing Δf. Thus, there is a sufficient chance, that one of the resulting modified upstream wavelengths λ_{USl21} or λ_{USl22} fall within one of the filter functions FF3, FF4 shown in Figure 2d, to a degree, such that within the next time window, an upstream signal transmitted at one of these modified upstream wavelengths X_{USl21}, X_{USl22} will most probably be detected by the optical line terminal. This gives the optical network unit the chance, to generate within the next time window an optical upstream signal with a next initial upstream wavelength USl21 or USl22, for successfully indicating its presence towards the optical line terminal via the transmitted initial upstream signal.

The functions of the various elements shown in the Figure 4a, including any functional blocks labeled as 'control unit', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'control unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Optical network unit (ONU) for an optical access network,
comprising
- an optical interface (OIF), adapted to receive an optical downstream signal from an optical fiber (OF),
- a tunable optical filter (TF), adapted to filter out a respective tunable wavelength bandwidth from said optical downstream signal,
- an optical reception unit (RXU), adapted to convert the filtered optical downstream signal (FOS) to an electrical signal (ES), and
- at least one control unit (CU), adapted
o to observe a signal power of said filtered optical downstream signal (FOS), using said electrical signal (ES), and
o to tune said wavelength bandwidth of said optical filter (TF), such that said signal power of said filtered optical downstream signal (FOS) is maximized, using said electrical signal (ES).
comprising furthermore
- an optical transmission unit (TXU), adapted to generate an optical upstream signal at an initial upstream wavelength,
wherein said optical interface (OIF) is furthermore adapted to provide said optical upstream signal to said optical fiber (OF), and wherein said control unit (CU) is furthermore adapted to
- detect an indication of a time window indicated by said optical downstream signal, by analyzing the filtered optical downstream signal, using said electrical signal (ES), and
- to control said optical transmission unit (TXU), such said optical upstream signal carries at least within the detected time window indication data indicating a presence of said optical network unit (ONU) within said optical access network.

2. Optical network unit (ONU) according to claim 1, wherein said control unit (CU) is furthermore adapted to observe said optical downstream signal within said time window for detecting a possible reception of configuration data indicated by said optical downstream signal, using said electrical signal (ES).

3. Optical network unit according to claim 2, wherein said control unit (CU) is furthermore adapted, such that, in case said control unit (CU) detects a reception of configuration data via said optical downstream signal, said control unit (CU) configures an identifier of said optical network unit (ONU) to an identifier indicated by said configuration data.

4. Optical network unit according to claim 2, wherein said control unit (CU) is furthermore adapted, such that,
- in case said control unit (CU) detects a reception of configuration data via said optical downstream signal, said control unit (CU)
o configures an identifier of said optical network unit (ONU) to an identifier indicated by said configuration data,
o controls said optical transmitter (TXU), such that it generates said optical upstream signal at an upstream wavelength indicated by said configuration data, and
o controls said tunable optical filter (TF), such that it filters out a downstream wavelength indicated by said configuration data,
- and in case said control unit (CU) does not detect a reception of configuration data via said optical downstream signal, said control unit (CU) controls said optical transmitter, such that it generates said optical upstream signal at a modified upstream wavelength, which is equal to said initial upstream wavelength plus or minus a predefined wavelength shift.

5. Optical network unit according to claim 1,
wherein said tunable optical filter (TF) is a thermally tunable optical filter.

6. Optical network unit according to claim 1,
wherein said optical reception unit (RXU) comprises a photodiode.

7. Optical network unit according to claim 5 and 6,
wherein said tunable optical filter (TF) and said photodiode are placed inside a TO can housing (TOC).

8. Optical network unit according to claim 1,
wherein said tunable optical filter (TF) is a thermally tunable optical filter comprising a heating circuit that is controllable by said control unit (CU).

9. Method of data transmission at an optical network unit (ONU) for an optical access
network,
comprising the steps of
- receiving an optical downstream signal from an optical fiber (OF),
- filtering out a respective tunable wavelength bandwidth from said optical downstream signal, using a tunable optical filter (TF),
- converting the filtered optical downstream signal (FOS) to an electrical signal (ES), using an optical reception unit (RXU),
comprising furthermore the steps of
- observing a signal power of said filtered optical downstream signal, using said electrical signal (ES) and at least one control unit (CU), and
- tuning said wavelength bandwidth of said optical filter (TF), such that said signal power of said filtered optical downstream signal (FOS) is maximized, using said electrical signal (ES) and said control unit (CU).
comprising furthermore the steps of
- generating an optical upstream signal at an initial upstream wavelength, using an optical transmission unit (TXU),
- providing said optical upstream signal to said optical fiber (OF), using said optical interface (OIF),
and furthermore comprising the steps of
- detecting a time window indicated by said optical downstream signal, by analyzing the filtered optical downstream signal, using said electrical signal (ES) and said control unit (CU),
- controlling said optical transmission unit (TXU), such that said optical upstream signal carries at least within the detected time window indication data indicating a presence of said optical network unit (ONU) within said optical access network, using said control unit (CU).

10. Method according to claim 9,
comprising furthermore the step of observing said optical downstream signal within said time window for detecting a possible reception of configuration data indicated by said optical downstream signal, using said electrical signal (ES) and said control unit (CU).

11. Method according to claim 10, wherein in case of detecting a reception of configuration data via said optical downstream signal, the method further comprises the step of configuring an identifier of said optical network unit (ONU) to an identifier indicated by said configuration data, using said control unit (CU).

12. Method according to claim 10, wherein in case of detecting a reception of configuration data via said optical downstream signal, the method further comprises the steps of
- configuring an identifier of said optical network unit (ONU) to an identifier indicated by said configuration data,
- controlling said optical transmitter (TXU), such that it generates said optical upstream signal at an upstream wavelength indicated by said configuration data, and
- controlling said tunable optical filter (TF), such that it filters out a downstream wavelength indicated by said configuration data,
using said control unit (CU), and wherein in case of not detecting a reception of configuration data via said optical downstream signal, the method further comprises the step of controlling said optical transmitter (TXU), such that it generates said optical upstream signal at a modified upstream wavelength, which is equal to said initial upstream wavelength plus or minus a predefined wavelength shift, using said control unit (CU).

## Patentansprüche

1. Optische Netzwerkeinheit (ONU) für ein optisches Zugangsnetzwerk, umfassend
- eine optische Schnittstelle (OIF), die ausgelegt ist zum Empfangen eines optischen Downstream-Signals von einer optischen Faser (OF),
- einen abstimmbaren optischen Filter (TF), der ausgelegt ist zum Ausfiltern einer entsprechenden abstimmbaren Wellenlängenbandbreite aus besagtem optischen Downstream-Signal,
- eine optische Empfangseinheit (RXU), die ausgelegt ist zum Konvertieren des gefilterten optischen Downstream-Signals (FOS) in ein elektrisches Signal (ES), und
- mindestens eine Steuereinheit (CU), die ausgelegt ist
∘ zum Beobachten einer Signalleistung von besagtem gefilterten optischen Downstream-Signal (FOS) unter Verwenden besagten elektrischen Signals (ES), und
∘ zum Abstimmen besagter Wellenlängenbandbreite besagten optischen Filters (TF), sodass besagte Signalleistung von besagtem gefilterten Downstream-Signal (FOS) maximiert wird unter Verwenden besagten elektrischen Signals (ES),
weiterhin umfassend
- eine optische Sendeeinheit (TXU), die ausgelegt ist zum Erzeugen eines optischen Upstream-Signals mit einer ursprünglichen Upstream-Wellenlänge,
wobei besagte optische Schnittstelle (OIF) weiterhin ausgelegt ist zum Bereitstellen besagten optischen Upstream-Signals für besagte optische Faser (OF) und wobei besagte Steuereinheit (CU) weiterhin ausgelegt ist
- zum Erkennen einer Anzeige eines Zeitfensters, das von besagtem optischen Downstream-Signal angezeigt wird, durch Analysieren des gefilterten optischen Downstream-Signals unter Verwenden besagten elektrischen Signals (ES) und
- zum Steuern besagter optischer Sendeeinheit (TXU), sodass das optische Upstream-Signal mindestens innerhalb des erkannten Zeitfensters Anzeigedaten trägt, die das Vorhandensein besagter optischer Netzwerkeinheit (ONU) innerhalb besagten optischen Zugangsnetzwerks anzeigt.

2. Optische Netzwerkeinheit (ONU) nach Anspruch 1, wobei besagte Steuereinheit (CU) weiterhin ausgelegt ist zum Beobachten besagten
optischen Downstream-Signals innerhalb besagten Zeitfensters zum Erkennen eines möglichen Empfangs von Konfigurationsdaten, die von besagtem optischen Downstream-Signal angezeigt werden, unter Verwenden besagten elektrischen Signals (ES).

3. Optische Netzwerkeinheit nach Anspruch 2,
wobei besagte Steuereinheit (CU) weiterhin ausgelegt ist, sodass, im Falle, dass besagte Steuereinheit (CU) ein Empfangen von Konfigurationsdaten über besagtes optische Downstream-Signal erkennt, besagte Steuereinheit (CU) eine Kennung besagter optischer Netzwerkeinheit (ONU) für eine Kennung konfiguriert, der durch besagte Konfigurationsdaten angezeigt wird.

4. Optische Netzwerkeinheit nach Anspruch 2, wobei besagte Steuereinheit (CU) weiterhin ausgelegt ist, sodass
- im Falle, dass besagte Steuereinheit (CU) ein Empfangen von Konfigurationsdaten über besagtes optische Downstream-Signal erkennt, besagte Steuereinheit (CU)
o eine Kennung besagter optischer Netzwerkeinheit (ONU) für eine Kennung konfiguriert, die durch besagte Konfigurationsdaten angezeigt wird,
∘ besagten optischen Sender (TXU) steuert, sodass er besagtes optisches Upstream-Signal mit einer Upstream-Wellenlänge erzeugt, die durch besagte Konfigurationsdaten angezeigt wird, und
o besagten abstimmbaren optischen Filter (TF) steuert, sodass er eine Downstream-Wellenlänge ausfiltert, die von besagten Konfigurationsdaten angezeigt wird,
- und im Falle, dass besagte Steuereinheit (CU) keinen Empfang von Konfigurationsdaten über besagtes optisches Downstream-Signal erkennt, besagte Steuereinheit (CU) besagten optischen Sender steuert, sodass er besagtes optisches Upstream-Signal mit einer modifizierten Upstream-Wellenlänge erzeugt, welche gleich ist besagter ursprünglicher Upstream-Wellenlänge plus oder minus einer vordefinierten Wellenlängenverschiebung.

5. Optische Netzwerkeinheit nach Anspruch 1, wobei besagter abstimmbarer optischer Filtern (TF) ein thermisch abstimmbarer optischer Filter ist.

6. Optische Netzwerkeinheit nach Anspruch 1, wobei besagte optische Empfangseinheit (RXU) eine Fotodiode umfasst.

7. Optische Netzwerkeinheit nach den Ansprüchen 5 und 6, wobei besagter abstimmbarer optischer Filter (TF) und besagte Fotodiode im Innern eines TOC-Can-Gehäuses (TOC) platziert sind.

8. Optische Netzwerkeinheit nach Anspruch 1, wobei besagter abstimmbarer optischer Filter (TF) ein thermisch abstimmbarer optischer Filter ist, der eine Heizschaltung umfasst, die durch besagte Steuereinheit (CU) gesteuert wird.

9. Verfahren einer Datenübertragung an einer optischen Netzwerkeinheit (ONU) für ein optisches Zugangsnetzwerk, umfassend die folgenden Schritte
- Empfangen eines optischen Downstream-Signals von einer optischen Faser (OF),
- Ausfiltern einer entsprechenden abstimmbaren Wellenlängenbandbreite aus besagtem optischem Downstream-Signal, unter Verwenden eines abstimmbaren optischen Filters (TF),
- Konvertieren des gefilterten optischen Downstream-Signals (FOS) in ein elektrisches Signal (ES), unter Verwenden einer optischen Empfangseinheit (RXU),
weiterhin umfassend die folgenden Schritte
- Beobachten einer Signalleistung besagten gefilterten optischen Downstream-Signals, unter Verwenden besagten elektrischen Signals (ES) und mindestens einer Steuereinheit (CU), und
- Abstimmen besagter Wellenlängenbandbreite besagten optischen Filters (TF), sodass besagte Signalleistung von besagtem gefiltertem Downstream-Signal (FOS) maximiert wird, unter Verwenden besagten elektrischen Signals (ES) und besagter Steuereinheit (CU),
weiterhin umfassend die folgenden Schritte
- Erzeugen eines optischen Upstream-Signals mit einer ursprünglichen Upstream-Wellenlänge, unter Verwenden einer optischen Sendeeinheit (TXU),
- Bereitstellen besagten optischen Upstream-Signals für besagte optische Faser (OF), unter Verwenden besagter optischen Schnittstelle (OIF),
und weiterhin umfassend die folgenden Schritte
- Erkennen eines Zeitfensters, das von besagtem optischem Downstream-Signal angezeigt wird, durch Analysieren des gefilterten optischen Downstream-Signals, unter Verwenden besagten elektrischen Signals (ES) und besagter Steuereinheit (CU),
- Steuern besagter optischen Sendeeinheit (TXU), sodass besagtes optisches Upstream-Signal mindestens innerhalb des erkannten Zeitfensters Anzeigedaten trägt, die ein Vorhandensein besagter optischer Netzwerkeinheit (ONU) innerhalb besagten optischen Zugangsnetzwerks anzeigt, unter Verwenden besagter Steuereinheit (CU).

10. Verfahren nach Anspruch 9, weiterhin umfassend den folgenden Schritt Beobachten besagten optischen Downstream-Signals innerhalb besagten Zeitfensters zum Erkennen eines möglichen Empfangs von Konfigurationsdaten, die von besagtem optischen Downstream-Signal angezeigt werden, unter Verwenden besagten elektrischen Signals (ES) und besagter Steuereinheit (CU).

11. Verfahren nach Anspruch 10, wobei, im Falle, dass ein Empfangen von Konfigurationsdaten über besagtes optisches Downstream-Signal erkannt wird, das Verfahren weiterhin den folgenden Schritt umfasst
Konfigurieren einer Kennung besagter optischer Netzwerkeinheit (ONU) für eine Kennung, die durch besagte Konfigurationsdaten angezeigt wird, unter Verwenden besagter Steuereinheit (CU).

12. Verfahren nach Anspruch 10, wobei, im Falle, dass ein Empfangen von Konfigurationsdaten über besagtes optisches Downstream-Signal erkannt wird, das Verfahren weiterhin die folgenden Schritte umfasst
- Konfigurieren einer Kennung besagter optischer Netzwerkeinheit (ONU) für eine Kennung, die durch besagte Konfigurationsdaten angezeigt wird,
- Steuern besagten optischen Senders (TXU), sodass er besagtes optisches Upstream-Signal mit einer Upstream-Wellenlänge erzeugt, die von besagten Konfigurationsdaten angezeigt wird, und
- Steuern besagten abstimmbaren optischen Filters (TF), sodass er eine Downstream-Wellenlänge ausfiltert, die von besagten Konfigurationsdaten angezeigt wird,
unter Verwenden besagter Steuereinheit (CU) und
wobei, im Falle, dass kein Empfangen von Konfigurationsdaten über besagtes optisches Upstream-Signal erkannt wird, das Verfahren weiterhin den folgenden Schritt umfasst
Steuern besagten optischen Senders (TXU), sodass er besagtes optisches Upstream-Signal mit einer modifizierten Upstream-Wellenlänge erzeugt, die gleich ist besagter ursprünglichen Upstream-Wellenlänge plus oder minus einer vordefinierten Wellenlängenverschiebung, unter Verwenden besagter Steuereinheit (CU).

## Revendications

1. Unité de réseau optique (ONU) destinée à un réseau d'accès optique, comprenant
- une interface optique (OIF), adaptée pour recevoir un signal optique descendant en provenance d'une fibre optique (OF),
- un filtre optique accordable (TF), adapté pour filtrer une bande passante de longueur d'onde accordable respective dudit signal optique descendant,
- une unité de réception optique (RXU), adaptée pour convertir le signal optique descendant filtré (FOS) en signal électrique (ES), et
- au moins une unité de commande (CU), adaptée
o pour observer la puissance de signal dudit signal optique descendant filtré (FOS), au moyen dudit signal électrique (ES), et
o pour accorder ladite bande passante de longueur d'onde dudit filtre optique (TF), de sorte que ladite puissance de signal dudit signal optique descendant filtré (FOS) soit maximisée, au moyen dudit signal électrique (ES),
comprenant en outre
- une unité d'émission optique (TXU), adaptée pour générer un signal optique montant à une longueur d'onde montante initiale,
dans laquelle ladite interface optique (OIF) est en outre adaptée pour délivrer ledit signal optique montant à ladite fibre optique (OF), et
dans laquelle ladite unité de commande (CU) est en outre adaptée pour
- détecter une indication d'une fenêtre temporelle indiquée par ledit signal optique descendant, en analysant le signal optique descendant filtré, au moyen dudit signal électrique (ES), et
- commander ladite unité d'émission optique (TXU), de sorte que ledit signal optique montant transporte au moins dans la fenêtre temporelle détectée des données d'indication indiquant la présence de ladite unité de réseau optique (ONU) au sein dudit réseau d'accès optique.

2. Unité de réseau optique (ONU) selon la revendication 1, dans laquelle ladite unité de commande (CU) est en outre adaptée pour observer ledit signal optique descendant dans ladite fenêtre temporelle afin de détecter une possible réception de données de configuration indiquées par ledit signal optique descendant, au moyen dudit signal électrique (ES).

3. Unité de réseau optique selon la revendication 2, dans laquelle ladite unité de commande (CU) est en outre adaptée, de sorte que, dans le cas où ladite unité de commande (CU) détecte une réception de données de configuration via ledit signal optique descendant, ladite unité de commande (CU) configure un identifiant de ladite unité de réseau optique (ONU) en un identifiant indiqué par lesdites données de configuration.

4. Unité de réseau optique selon la revendication 2, dans laquelle ladite unité de commande (CU) est en outre adaptée, de sorte que,
- dans le cas où ladite unité de commande (CU) détecte une réception de données de configuration via ledit signal optique descendant, ladite unité de commande (CU)
∘ configure un identifiant de ladite unité de réseau optique (ONU) en un identifiant indiqué par lesdites données de configuration,
∘ commande ledit émetteur optique (TXU), de sorte qu'il génère ledit signal optique montant à une longueur d'onde montante indiquée par lesdites données de configuration, et
∘ commande ledit filtre optique accordable (TF), de sorte qu'il filtre une longueur d'onde descendante indiquée par lesdites données de configuration, et
- dans le cas où ladite unité de commande (CU) ne détecte pas de réception de données de configuration via ledit signal optique descendant, ladite unité de commande (CU) commande ledit émetteur optique, de sorte qu'il génère ledit signal optique montant à une longueur d'onde montante modifiée, qui est égale à ladite longueur d'onde montante initiale plus ou moins un décalage de longueur d'onde prédéfini.

5. Unité de réseau optique selon la revendication 1, dans laquelle ledit filtre optique accordable (TF) est un filtre optique accordable thermiquement.

6. Unité de réseau optique selon la revendication 1, dans laquelle ladite unité de réception optique (RXU) comprend une photodiode.

7. Unité de réseau optique selon les revendications 5 et 6, dans laquelle ledit filtre optique accordable (TF) et ladite photodiode sont placés dans un boîtier tronconique TO (TOC).

8. Unité de réseau optique selon la revendication 1, dans laquelle ledit filtre optique accordable (TF) est un filtre optique thermiquement accordable comprenant un circuit de chauffage qui peut être commandé par ladite unité de commande (CU).

9. Procédé de transmission de données au niveau d'une unité de réseau optique (ONU) destiné à un réseau d'accès optique, comprenant les étapes suivantes :
- recevoir un signal optique descendant en provenance d'une fibre optique (OF),
- filtrer une bande passante de longueur d'onde accordable respective dudit signal optique descendant, au moyen d'un filtre optique accordable (TF),
- convertir le signal optique descendant filtré (FOS) en un signal électrique (ES), au moyen d'une unité de réception optique (RXU),
comprenant en outre les étapes suivantes :
- observer la puissance de signal dudit signal optique descendant filtré, au moyen dudit signal électrique (ES) et d'au moins une unité de commande (CU), et
- accorder ladite bande passante de longueur d'onde dudit filtre optique (TF), de sorte que ladite puissance de signal dudit signal optique descendant filtré (FOS) soit maximisée, au moyen dudit signal électrique (ES) et de ladite unité de commande (CU),
comprenant en outre les étapes suivantes :
- générer un signal optique montant à une longueur d'onde montante initiale, au moyen d'une unité d'émission optique (TXU),
- délivrer ledit signal optique montant à ladite fibre optique (OF), au moyen de ladite interface optique (OIF),
et comprenant en outre les étapes suivantes :
- détecter une fenêtre temporelle indiquée par ledit signal optique descendant, en analysant le signal optique descendant filtré, au moyen dudit signal électrique (ES) et de ladite unité de commande (CU),
- commander ladite unité d'émission optique (TXU), de sorte que ledit signal optique montant transporte au moins dans la fenêtre temporelle détectée des données d'indication indiquant la présence de ladite unité de réseau optique (ONU) au sein dudit réseau d'accès optique, au moyen de ladite unité de commande (CU).

10. Procédé selon la revendication 9, comprenant en outre l'étape suivante :
observer ledit signal optique descendant dans ladite fenêtre temporelle afin de détecter une possible réception de données de configuration indiquées par ledit signal optique descendant, au moyen dudit signal électrique (ES) et de ladite unité de commande (CU).

11. Procédé selon la revendication 10, dans lequel en cas de détection d'une réception de données de configuration via ledit signal optique descendant, le procédé comprend en outre l'étape suivante :
configurer un identifiant de ladite unité de réseau optique (ONU) en un identifiant indiqué par lesdites données de configuration, au moyen de l'unité de commande (CU).

12. Procédé selon la revendication 10, dans lequel en cas de détection d'une réception de données de configuration via ledit signal optique descendant, le procédé comprend en outre les étapes suivantes :
- configurer un identifiant de ladite unité de réseau optique (ONU) en un identifiant indiqué par lesdites données de configuration,
- commander ledit émetteur optique (TXU), de sorte qu'il génère ledit signal optique montant à une longueur d'onde montante indiquée par lesdites données de configuration, et
- commander ledit filtre optique accordable (TF), de sorte qu'il filtre une longueur d'onde descendante indiquée par lesdites données de configuration,
au moyen de ladite unité de commande (CU), et
dans lequel en cas de non-détection d'une réception de données de configuration via ledit signal optique descendant, le procédé comprend en outre l'étape suivante :
commander ledit émetteur optique (TXU), de sorte qu'il génère ledit signal optique montant à une longueur d'onde modifiée, qui est égale à ladite longueur d'onde montante initiale plus ou moins un décalage de longueur d'onde prédéfini, au moyen de ladite unité de commande (CU).
